# EUROPEAN PATENT APPLICATION

(11) **EP 4 531 253 A1**
(43) Date of publication of application: **02.04.2025**
(21) Application number: 24194981.7
(22) Date of filing: 16.08.2024
(51) Int. Cl.: H02M 1/00, H02M 1/32, H02H 7/12, H02M 1/36, H02H 9/00, H02M 3/335

(54) **BURST MODE IN-RUSH CURRENT CONTROL FOR ACTIVE CURRENT LIMITER CIRCUIT FOR DC-DC CONVERTER**

(30) Priority: 29.09.2023 IN 202311065716
(71) Applicant: Hamilton Sundstrand Corporation, Charlotte, NC 28217-4578 (US)
(72) Inventor: SENGODAN, Rajkumar, Namakkal (IN); F, Ann Freida, Bangalore (IN)
(74) Representative: Dehns

(57) **Abstract**

A Direct Current (DC)-DC converter includes an input capacitor connected across a positive input terminal and a return input terminal. A current limiter includes a reference threshold portion connected across the positive input terminal and the return input terminal and a reference node. A difference amplifier circuit includes connections to the positive input terminal and to the return input terminal. The difference amplifier circuit generates a feedback output dependent on a voltage differential between the positive input terminal and the return input terminal. A comparison logic circuit receives the feedback output as a first comparison input and voltage of the reference node as a second comparison input and generates a comparison output. An active current limiting portion includes a current limiting transistor connected to at least one of the positive input terminal or the return input terminal and limits a current on one of the positive and return input terminals.

## Description

### CROSS-REFERENCE TO RELATED APPLICATIONS

This application claims the benefit of Indian Provisional Application No. 202311065716 filed September 29, 2023.

### BACKGROUND

The subject disclosure relates to aircraft power distribution systems, and more specifically to a direct current (DC)-DC converter design including burst mode in-rush control circuitry.

Commercial and military aircraft typically include one or more electrical generators to convert excess rotational power from the aircraft engines into electrical power that is then utilized to power various electrical systems throughout the aircraft. In other examples, aircraft can use electrical power storages (e.g., batteries, super capacitors, and the like) to store electrical power from a power source on the ground, for use during a flight.

In a typical aircraft the power is distributed from the power source to the multiple electrical systems using a DC power distribution system, and the DC power received at each electrical system is converted to the DC voltage/power levels that are required by that electrical system. When power is initially applied to the power distribution system in such examples, the DC-DC converters are subjected to an in-rush current which can exceed a rated surge current recommendation. Repeated exposure to such surge currents can damage the internal characteristics of capacitors within a DC-DC converter, and decrease the lifespan of the DC-DC converter.

### BRIEF DESCRIPTION

In one exemplary embodiment a Direct Current (DC)-DC converter includes an input capacitor connected across a positive input terminal and a return input terminal, a DC-DC converter circuit connected across the positive input terminal and the return input terminal, a current limiter including a reference threshold portion connected across the positive input terminal and the return input terminal and including a reference node, a difference amplifier circuit including a connection to the positive input terminal and a connection to the return input terminal, the difference amplifier circuit being configured to generate a feedback output dependent on a voltage differential between the positive input terminal and the return input terminal, a comparison logic circuit configured to receive the feedback output as a first comparison input and receive a voltage of the reference node as a second comparison input and configured to generate a comparison output and an active current limiting portion including a current limiting transistor connected to at least one of the positive input terminal and the return input terminal, and configured to limit a current on the at least one of the positive input terminal and the return input terminal.

In addition to one or more of the features described herein the active current limiting portion is a high side current limiter, is connected to the positive input terminal, and the current limiting transistor interrupts the negative input terminal.

In addition to one or more of the features described herein the active current limiting portion is a low side current limiter, and the current limiting transistor interrupts the negative input terminal.

In addition to one or more of the features described herein the voltage differential between the positive input terminal and the return input terminal corresponds to a charging state of an input capacitor.

In addition to one or more of the features described herein the difference amplifier circuit comprises an operational amplifier (op-amp) including an inverting input connected to the return input terminal and a non-inverting input connected to the positive input terminal, an wherein an output of the op-amp is connected to the feedback input of the comparator via a voltage divider.

In addition to one or more of the features described herein the reference portion comprises a resistor connecting the positive input terminal to the reference node and a capacitor connecting the reference node to the return input terminal.

In addition to one or more of the features described herein the current limiter is configured to set the current limiting transistor to off when the comparator outputs a low signal and wherein the current limiter is configured to set the current limiting transistor mode to follow a bias voltage of the active limiting circuit when the comparator outputs a high signal.

In addition to one or more of the features described herein the comparator outputs low in response to the first comparison input exceeding the second comparison input and outputs high in response to the second comparison input exceeding the first comparison input.

In addition to one or more of the features described herein includes an additional failsafe circuit connected parallel to the current limiter.

In another exemplary embodiment an aircraft power distribution system includes at least one engine mounted electric generator configured to convert rotational energy within the engine to electrical energy, a power distribution controller configured to receive the electrical energy from the electric generator, convert the electrical energy to direct current (DC) energy, provide the DC energy to multiple electric subsystems within the aircraft, wherein at least one of the electric subsystems is configured to convert the received DC power to a different DC voltage and current using a DC-DC converter, wherein the DC-DC converter comprises an input capacitor connected across a positive input terminal and a return input terminal, a DC-DC converter circuit connected across the positive input terminal and the return input terminal, a current limiter including a reference threshold portion connected across the positive input terminal and the return input terminal and including a reference node, a difference amplifier circuit including a connection to the positive input terminal and a connection to the return input terminal, the difference amplifier circuit being configured to generate a feedback output dependent on a voltage differential between the positive input terminal and the return input terminal, a comparison logic circuit configured to receive the feedback output as a first comparison input and receive a voltage of the reference node as a second comparison input and configured to generate a comparison output, and an active current limiting portion including a current limiting transistor connected to at least one of the positive input terminal and the return input terminal, and configured to limit a current on the at least one of the positive input terminal and the return input terminal.

In addition to one or more of the features described herein the active current limiting portion is a high side current limiter, is connected to the positive input terminal, and the current limiting transistor interrupts the negative input terminal.

In addition to one or more of the features described herein the active current limiting portion is a low side current limiter, and the current limiting transistor interrupts the negative input terminal.

In addition to one or more of the features described herein the voltage differential between the positive input terminal and the return input terminal corresponds to a charging state of an input capacitor.

In addition to one or more of the features described herein the difference amplifier circuit comprises an operational amplifier (op-amp) including an inverting input connected to the return input terminal and a non-inverting input connected to the positive input terminal, an wherein an output of the op-amp is connected to the feedback input of the comparator via a voltage divider.

In addition to one or more of the features described herein the reference portion comprises a resistor connecting the positive input terminal to the reference node and a capacitor connecting the reference node to the return input terminal.

In addition to one or more of the features described herein the current limiter is configured to set current limiting transistor off when the comparator outputs a low signal and wherein the current limiter is configured to set the current limiting transistor mode to follow a bias voltage of the active limiting circuit when the comparator outputs a high signal.

In addition to one or more of the features described herein the comparator outputs low in response to the first comparison input exceeding the second comparison input and outputs high in response to the second comparison input exceeding the first comparison input.

The above features and advantages, and other features and advantages of the disclosure are readily apparent from the following detailed description when taken in connection with the accompanying drawings.

### BRIEF DESCRIPTION OF THE DRAWINGS

Other features, advantages and details appear, by way of example only, in the following detailed description, the detailed description referring to the drawings and tables in which:
FIG. 1 schematically represents a high level aircraft power distribution system.
FIG. 2 schematically illustrates a DC-DC converter.
FIG. 3 is a chart illustrating an in-rush current characteristic of the DC-DC converter of FIG. 2.
FIG. 4. Schematically illustrates a burst mode in-rush current control circuit connection to multiple DC-DC converters.
FIG. 5 schematically illustrates a circuit diagram of a burst mode in-rush current control circuit to a single DC-DC converter using a first current limiting configuration.
FIG. 6 schematically illustrates a circuit diagram of a burst mode in-rush current control circuit applied to a single DC-DC converter using a second current limiting configuration.
FIG. 7 illustrates TABLE 1 which shows an operation of the current limiting of a failsafe circuit of either FIG. 5 or FIG. 6.

### DETAILED DESCRIPTION

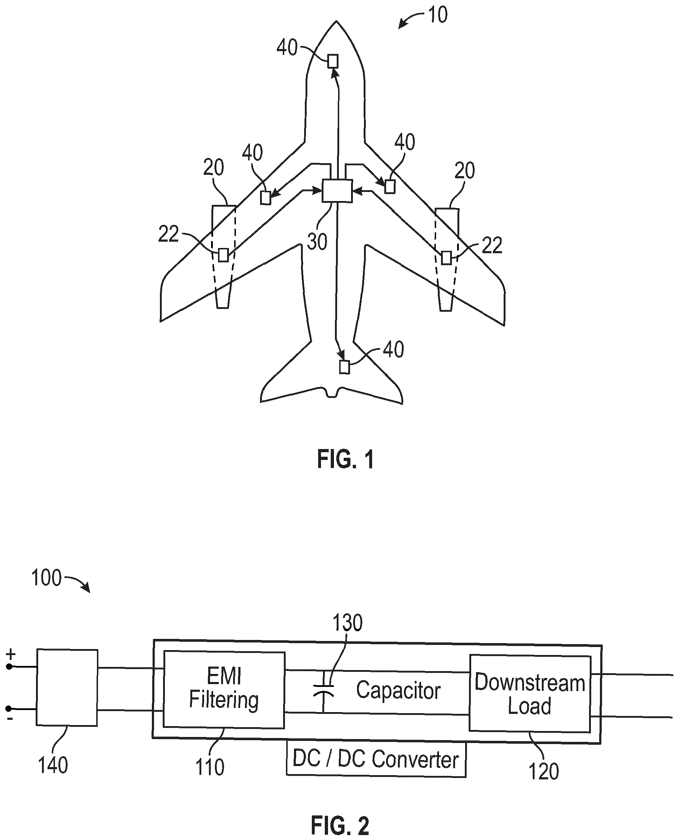

FIG. 1 illustrates an aircraft 10, including two wing mounted engines 20. Each engine 20 includes a generator 22 configured to convert rotation from within the engine 20 into electricity. Typically, due to the rotation of the engine 20 and the type of generator 22 utilized, the electricity is provided in the form of alternating current (AC). The alternating current is provided to a power distribution system 30, which converts the power to DC using a converter. The power distribution system 30 distributes the DC power to multiple electrical systems 40 distributed throughout the aircraft 10, and electrical system 40 utilizes the received power for operations. The illustrated number and positions of the electrical system 40 is exemplary and is not representative of any particular physical configurations.

Due to the diverse nature and function of the electrical systems 40 different voltages and power levels of DC power may be required at different electrical systems 40. To accommodate these variations, electrical systems 40 that require power at a different voltage or power level than provided by the power distribution system 30 incorporate DC-DC converters which receive the power and convert it to voltage and power levels required by the electrical system 40.

With continued reference to FIG. 1, FIG. 2 illustrates one such example DC-DC converter 100, The DC-DC converter 100 includes a conventional electromagnetic interference (EMI) filtering portion 110 connected to a downstream load 120 (such as a flyback converter, or any other type of DC-DC conversion circuit) via a capacitor 130. In alternate configurations, the capacitor 130 can be in front of the EMI filtering portion 110 without altering the performance or operations of the DC-DC converter 100. In some examples, the capacitor 130 is a tantalum capacitor, which is typically constructed of a pellet of porous tantalum metal as an anode, covered by an insulating oxide layer that forms the dielectric, surrounded by liquid or solid electrolyte as a cathode. Due to the very thin and relatively high permittivity dielectric layer, tantalum capacitors having a high capacitance per volume and a lower weight than other types of capacitors. In other examples, any capacitor type that functions similarly to a tantalum capacitor and has a similar or higher capacitance per volume could be utilized to similar effect.

In a typical system the capacitor 130 is positioned to ensure that there are no voltage drops to the downstream load 120. However, certain types of capacitors, such as tantalum capacitors, are susceptible to oxidization during in-rush currents due to the chemical characteristics of the constituent materials. Oxidization can degrade performance and eventually lead to a short circuit event, thereby shortening the lifespan of the converter. With reference to FIGS. 1 and 2, FIG. 3 illustrates a typical surge current 310 at the capacitor 130 when the voltage source is initially turned on (e.g., when power is initially provided to the DC-DC converter 100). As voltage is initially applied at a time 102, a current spike 312 occurs, and quickly decays. The spike 312 is the in-rush current.

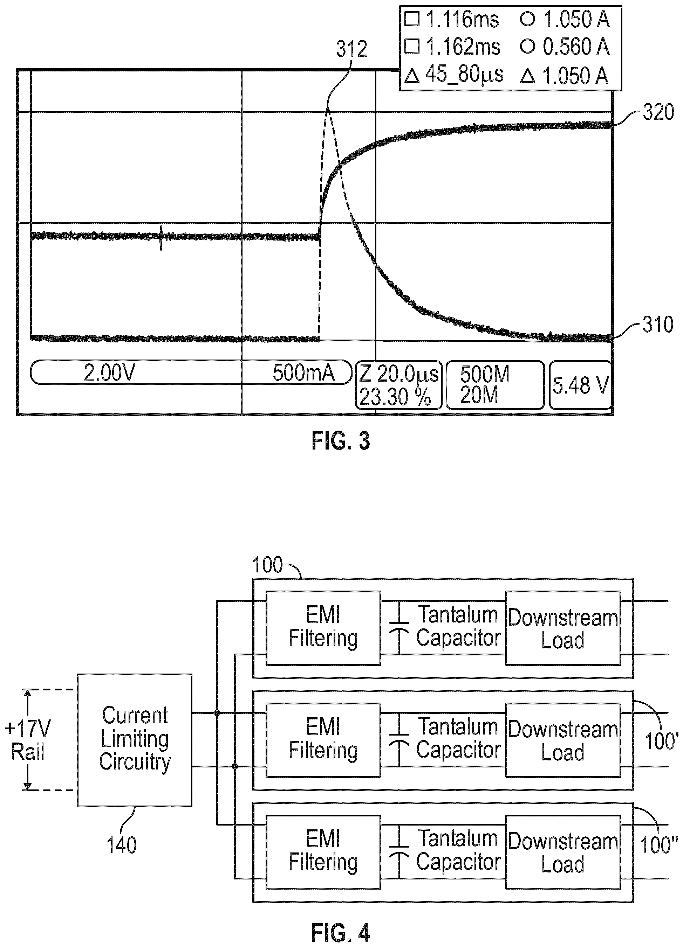

In order to reduce, or eliminate, the possibility of an in-rush current that exceeds the rated surge current of the capacitor 130, a burst mode in-rush current limiting circuit 140 is connected the DC-DC converter 100. FIG. 4 illustrates an alternate example configuration where the single burst mode in-rush current limiting circuit 140 is connected to multiple identical, or similar, DC-DC converters 100, 100', 100". The burst mode in-rush current limiting circuit 140 provides a limit to the charging current of the capacitor 130 based on a burst mode in-rush control scheme during power-up. The control scheme creates a discontinuous power dissipation and sequential capacitor charging resulting in an on/off cycling. The discontinuous power dissipation and sequential capacitor charging increases the lifetime and reliability of the capacitor 130. In addition, it is appreciated that other protections may be used alongside the burst mode in-rush current limiting circuit, including failsafe circuits to shut down the system in an event of an overcurrent failure.

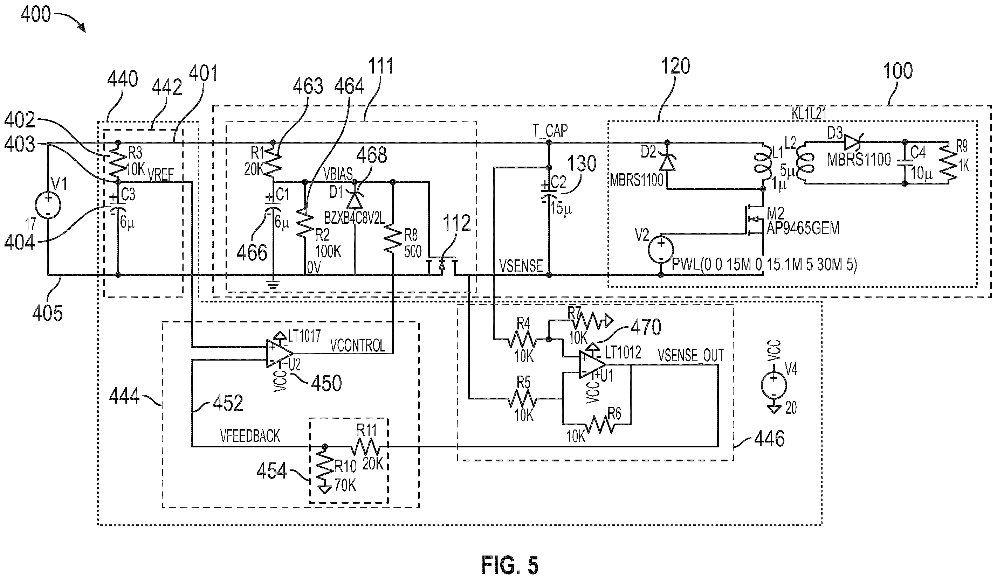

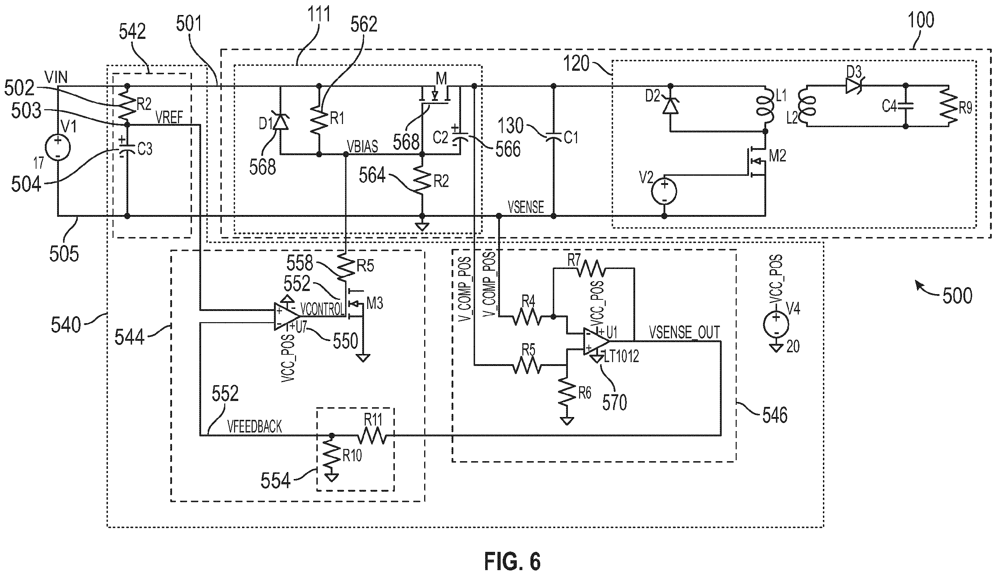

With continued reference to FIGS. 1-4, FIGS. 5 and 6 illustrate example burst mode in-rush current limiting circuits 440, 540. In both cases, the circuits 440, 540 can be generalized as four functioning portions, a reference threshold portion 442, 542, a comparison logic 444, 544 and a difference amplifier portion 446, 546 and an active current limiting portion 111. The reference portion 442, 542 is the same between the two circuits 440, 540 with a resistor 402, 502 connecting a positive DC rail 401, 501 to a node 403, 503, and a capacitor 404, 504 connecting the node 403, 503 to a negative DC rail 405, 505. The node 403, 503 provides a reference voltage output to the comparison logic 444, 544. The comparison logic circuits 444, 544 are similar, including a comparator 450 receiving a feedback loop 452 through a pair of resistors 454, 554 and originating from the difference amplifier portion 446, 546. The comparison logics 450, 550 differ in the particular circuit topology to which the output of the comparator 450, 550 is provided. In the example of FIG. 5, the output of the comparator 450 is provided to the negative DC rail 405, which is in turn connected to a source of a MOSFET 112 within the active limiting circuit 111 of the DC-DC converter. In the example of FIG. 6, the comparison logic 544 includes a MOSFET 552 and the output of the comparator 550 is provided to the gate of the MOSFET 552. The source of the MOSFET 552 is connected to a ground, and the drain of the MOSFET 552 is connected to an active current limiting circuit 111 via a resistor 558. The topologies of the amplifier portions 446, 546 are identical, and function in the same manner.

With general reference to the example of FIG. 5, the active current limiting circuit 111 uses an NMOS type MOSFET 112 to provide low side current limiting. As used herein low side current limiting refers to inclusion of a current limiting element or circuit that limits the current capable of passing on the negative DC rail 405. The active current limiting circuit 111 of FIG. 5 includes resistors 462, 464 and a capacitor 466. A Zener diode 468 regulates and limits a charging of the gate terminal of the MOSFET 112, maintaining the gate terminal at a constant voltage. A capacitor 130 acts as an input capacitor for the DC-DC converter (load 120).

With general reference to the example of FIG. 6, the in-rush control circuit 110 utilizes a PMOS control scheme with high side current limiting. As used herein, high side current limiting refers to including of a current limiting element or circuit that limits the current capable of passing on the positive DC rail 501. The active limiting section 110 of FIG. 6 utilizes resistors 562, 564 and a capacitor 566. A Zener diode 568 regulates and limits the charging of the gate terminal of the MOSFET 568, maintaining the gate terminal of the MOSFET 568 at a constant voltage. The DC-DC converter (load 120) includes the capacitor 130 acting as the input capacitor.

While the circuit topology across the example circuits 400, 500 of FIGS. 4 and 5 varies in some ways, operationally, the circuits 400, 500 function similarly to prevent burst in-rush currents. The in-rush control is implemented beginning with the difference amplifier portion 446, 546, which monitors the voltage across the capacitor 130 using an operational amplifier (op-amp) 470, 570. The output of the op-amp 470, 570 is a stepped down using a resistive voltage divider 454, 554 in order to provide an acceptable level for the comparison logic 444, 544. The feedback is provided to an inverting terminal of the comparator 450, 550, while the reference voltage from node 403, 503 is provided to a non-inverting terminal of the comparator 450, 550. The output of the comparator 450, 550 controls the charging slope rate of the capacitor 130 by comparing the rate with a reference charging time defined by the resistance value of the resistor 402, 502 and the capacitance of the capacitor 404, 504 in the reference threshold portion 440, 540.

Within the active limiting circuit 111, as a positive voltage is applied, charge builds up on the capacitor 466, 566 and voltage starts to build across the capacitor. Accordingly, the connected MOSFET 112, 568 operates sequentially through four states: an off-state at initial power up, a linear region state and a cut-off region state both of which provide burst mode current limiting, and finally a saturation mode state in which the MOSFET 112, 568 operates in a conventional manner.

During the initial power on (i.e. off State operation), the MOSFET 112, 568 is in the off-state and the drain to source voltage is high. The charge time and turn-on of the MOSFET 112, 568 is slowed by the capacitance of the connected capacitor 466, 566, and the particular resistances of the resistors 462, 464, 562, 564 and capacitances of the capacitor 466, 566 are selected to allow the input capacitor 1130 to charge slowly, limiting the in-rush current.

During the linear region and cut off modes (i.e. the burst mode current limiting operation), the voltage across the MOSFET 112, 568 results in a large voltage difference between the return connection of the MOSFET 112, 568 source and the return input of the DC-DC converter 120. The gate to source voltage of the MOSFET 112, 568 increases gradually and the drain to source voltage decreases. Simultaneously, the drain current (i.e. the current through the drain of the MOSFET 112, 568) starts to increase. While this occurs the MOSFET 112, 568 sees a high voltage and a high current, and a substantial amount of power is dissipated across the MOSFET 112, 568 and the MOSFET 112, 568 operates as a constant current sink.

The reference slope provided from the reference node 403, 503 determines the initial charging slope of the capacitor 112, 568 and minimizes electrical stresses on the capacitor 112, 568 during the initial turn on.

The comparator 450, 550 generates an output voltage, and the output voltage functions as a burst mode charging control. The output voltage pulls the MOSFET 112, 568 sequentially into a linear region operation and a cutoff region operation resulting in a threshold on/off cycling of the MOSFET 112, 568. After each successive off state, the turn on time of the MOSFET 112, 568 is determined by the electronics within the active limiting circuit 111 and each burst current amplitude decreases logarithmically over the successive turn on cycles. While, multiple on/off cycles occur during the initial burst period, the total time elapsed will be a few milliseconds, resulting in a negligible (if any) impact on the normal turn-on operations of connected loads 120, such as DC-DC converters. The total number of burst steps can be configured by adjusting the resistances of the resistors in the voltage divider circuit 454, 554.

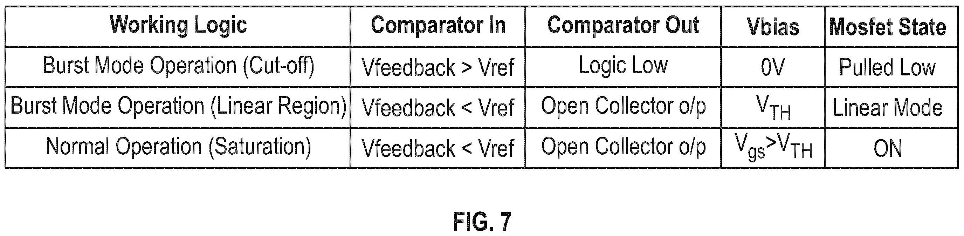

The above operations can be generalized via the application of via two conditions, and the resultant operations are illustrated in the table of FIG. 7:

When the feedback voltage is higher than the reference voltage at the comparator, the comparator outputs low and turns the MOSFET off.

When the feedback voltage is lower than the reference voltage at the comparator, the comparator outputs high and the MOSFET state (on, off, triode) follows the bias voltage determined by the electronics in the active limiting circuit 111.

By utilizing the burst mode in-rush control circuits disclosed herein, the peak current is limited to less than the maximum current value of the capacitor 130 and stress on the internal circuitry is reduced due to the reduction or elimination of in-rush currents. This in turn provides a longer power supply life, lower heat dissipation requirements, and more reliable operations.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A Direct Current "DC"-DC converter (100) comprising:
an input capacitor (130) connected across a positive input terminal and a return input terminal;
a DC-DC converter circuit connected across the positive input terminal and the return input terminal;
a current limiter comprising:
a reference threshold portion connected across the positive input terminal and the return input terminal and including a reference node;
a difference amplifier circuit including a connection to the positive input terminal and a connection to the return input terminal, the difference amplifier circuit being configured to generate a feedback output dependent on a voltage differential between the positive input terminal and the return input terminal;
a comparison logic circuit configured to receive the feedback output as a first comparison input and receive a voltage of the reference node as a second comparison input and configured to generate a comparison output; and
an active current limiting portion including a current limiting transistor connected to at least one of the positive input terminal or the return input terminal, and configured to limit a current on the at least one of the positive input terminal or the return input terminal.

2. The DC-DC converter of claim 1, wherein the active current limiting portion is a high side current limiter, is connected to the positive input terminal, and the current limiting transistor interrupts the negative input terminal, or wherein the active current limiting portion is a low side current limiter, and the current limiting transistor interrupts the negative input terminal.

3. The DC-DC converter of any preceding claim, wherein the voltage differential between the positive input terminal and the return input terminal corresponds to a charging state of an input capacitor.

4. The DC-DC converter of any preceding claim, wherein the difference amplifier circuit comprises an operational amplifier "op-amp" (470, 570) including an inverting input connected to the return input terminal and a non-inverting input connected to the positive input terminal, an wherein an output of the op-amp is connected to the feedback input of the comparator via a voltage divider.

5. The DC-DC converter of any preceding claim, wherein the reference portion comprises a resistor connecting the positive input terminal to the reference node and a capacitor connecting the reference node to the return input terminal.

6. The DC-DC converter of any preceding claim, wherein the current limiter is configured to set the current limiting transistor to off when the comparator outputs a low signal and wherein the current limiter is configured to set the current limiting transistor mode to follow a bias voltage of the active limiting circuit when the comparator outputs a high signal.

7. The DC-DC converter of any preceding claim, wherein the comparator is configured to output low in response to the first comparison input exceeding the second comparison input and output high in response to the second comparison input exceeding the first comparison input.

8. The DC-DC converter of any preceding claim, further comprising an additional failsafe circuit connected parallel to the current limiter.

9. An aircraft power distribution system comprising:
at least one engine mounted electric generator (22) configured to convert rotational energy within the engine to electrical energy;
a power distribution controller configured to receive the electrical energy from the electric generator, convert the electrical energy to direct current "DC" energy, provide the DC energy to multiple electric subsystems within the aircraft, wherein at least one of the electric subsystems is configured to convert the received DC power to a different DC voltage and current using a DC-DC converter;
wherein the DC-DC converter comprises an input capacitor connected across a positive input terminal and a return input terminal;
a DC-DC converter circuit connected across the positive input terminal and the return input terminal;
a current limiter comprising:
a reference threshold portion connected across the positive input terminal and the return input terminal and including a reference node;
a difference amplifier circuit including a connection to the positive input terminal and a connection to the return input terminal, the difference amplifier circuit being configured to generate a feedback output dependent on a voltage differential between the positive input terminal and the return input terminal;
a comparison logic circuit configured to receive the feedback output as a first comparison input and receive a voltage of the reference node as a second comparison input and configured to generate a comparison output; and
an active current limiting portion including a current limiting transistor connected to at least one of the positive input terminal or the return input terminal, and configured to limit a current on the at least one of the positive input terminal or the return input terminal.

10. The DC-DC converter of claim 9, wherein the active current limiting portion is a high side current limiter, is connected to the positive input terminal, and the current limiting transistor is configured to interrupt the negative input terminal, or wherein the active current limiting portion is a low side current limiter, and the current limiting transistor is configured to interrupt the negative input terminal.

11. The DC-DC converter of claim 9 or 10, wherein the voltage differential between the positive input terminal and the return input terminal corresponds to a charging state of an input capacitor.

12. The DC-DC converter of any of claims 9 to 11, wherein the difference amplifier circuit comprises an operational amplifier (op-amp) including an inverting input connected to the return input terminal and a non-inverting input connected to the positive input terminal, and wherein an output of the op-amp is connected to the feedback input of the comparator via a voltage divider.

13. The DC-DC converter of any of claims 9 to 12, wherein the reference portion comprises a resistor connecting the positive input terminal to the reference node and a capacitor connecting the reference node to the return input terminal.

14. The DC-DC converter of any of claims 9 to 13, wherein the current limiter is configured to set current limiting transistor off when the comparator outputs a low signal and wherein the current limiter is configured to set the current limiting transistor mode to follow a bias voltage of the active limiting circuit when the comparator outputs a high signal.

15. The DC-DC converter of any of claims 9 to 14, wherein the comparator is configured to output low in response to the first comparison input exceeding the second comparison input and configured to output high in response to the second comparison input exceeding the first comparison input.
